(19) Europäisches Patentamt
European Patent Office
Office européen des brevets

(11) Publication number: **0 239 974 B1**

## (12) EUROPEAN PATENT SPECIFICATION

(45) Date of publication of patent specification: **09.10.91**

(51) Int. Cl.⁵: **G11B 11/10, G11B 13/04**

(21) Application number: **87104694.2**

(22) Date of filing: **30.03.87**

(54) Magneto-optical recording medium.

(30) Priority: **29.03.86 JP 72291/86**
**27.09.86 JP 229052/86**
**27.09.86 JP 229053/86**

(43) Date of publication of application:
**07.10.87 Bulletin 87/41**

(45) Publication of the grant of the patent:
**09.10.91 Bulletin 91/41**

(84) Designated Contracting States:
**DE NL**

(56) References cited:

**PATENT ABSTRACTS OF JAPAN, vol. 10, no. 152 (P-462)[2208], 3th June 1986; & JP - 61 005 450 (MATSUSHITA DENKI SANGYO K.K.) 11-01-1986**

**PATENT ABSTRACTS OF JAPAN, vol. 9, no. 296 (P-407)[2019], 22th November 1985; & JP - 60 131 659 (RICOH K.K.) 13-07-1985**

**PATENT ABSTRACTS OF JAPAN, vol. 9, no. 269 (P-400)[1992], 26th October 1985; & JP - 60 115 037 (RICOH K.K.) 21-06-1985**

(73) Proprietor: **NEC HOME ELECTRONICS LTD.**
**8-17, Umeda, 1-chome Kita-Ku**
**Osaka-Shi Osaka(JP)**

(72) Inventor: **Shinichi, Katsuda**
**NEC Home Electronics Ltd. No. 8-17, Umeda 1-chome**
**Kita-ku Osaka-shi Osaka(JP)**
Inventor: **Takayuki, Matsumoto**
**NEC Home Electronics Ltd. No. 8-17, Umeda 1-chome**
**Kita-ku Osaka-shi Osaka(JP)**

(74) Representative: **Diehl, Hermann Dr. et al**
**Diehl & Glaeser, Hiltl & Partner Flüggenstrasse 13**
**W-8000 München 19(DE)**

## Description

The present invention relates to a magneto-optical recording medium in which information is written to a magnetic film at the Curie point by the thermal action of light and the information is reproduced by reading optical modulation of a reflected light using the magneto-optical effect such as the Kerr effect.

The Japanese publication No. 61-5450 describes an optical recording member consisting of a base material of, e.g., polymethylmethacrylate, on which a thin protective film of $Al_2O_3$, $TiO_2$, $ZrO_2$, $Y_2O_3$, $Nb_2O_5$ etc. is formed. Next in this structure is a thin film of an optical recording medium, e.g., Te-Sn-Ge-O, followed by a further protective layer, similar to the first one. On the upper surface of this layer, a final base material, which is the same as the above base material, is formed. This reference is, however, silent about suitable physical properties of the materials used as protective films.

Magneto-optical recording media are attracting attention in various fields, e.g., in that of external computer memories, as those for use in erasable/rewritable high density, large capacity optical memories and research and development are carried on in various phases to put them to practical use.

The recording of information on a magneto-optical recording medium is made by the so-called writing at the Curie point, the process of which comprises irradiating laser beams to the medium while a magnetic field is applied thereto and inverting the direction of magnetization by raising temperatures to over the Curie point. The reproduction of information is made by reading changes in the angle of Kerr rotation by making use of the magneto-optical effect according to which the Kerr rotation is effected in the direction in which the polarized angle of the reflected laser beam differs from that of the laser beam radiated to the medium.

The magneto-optical medium for recording and reproducing information as-described above is basically composed of a transparent substrate and a magnetic film layer (recording layer) made from magneto-optical recording material having vertical magnetic anisotropy. The magnetic film layer is formed on the transparent substrate by means of sputtering, electron beam evaporation of ion plating.

As the magnetic material from which the magnetic film is made, rare earth-transition metal amorphous alloy is presently considered best in view of recording sensitivity, the magnitude of the magneto-optical effect as decisive factor at the time of reproduction, and reduction in the noise level. As the rare earth-transition metal amorphous alloy, TbFeCo, GdTbFe, GdTbFeDy and TbFe as a central figure have been examined. However, those rare earth-transition metal films are readily oxidized, particularly in the atmosphere of high humidity. For this reason, there has recently been proposed a medium structure in which a primary protective layer is formed between a transparent substrate and a recording layer and a protective layer is provided on the recording layer, so that a magnetic film constituting the recording layer is protected by means of this sandwich formation. If in such a recording medium including the primary protective layer and the protective layer the primary protective layer is formed from a material having a refractive index which is higher than that of the transparent substrate, an angle of apparent magneto-optical rotation (angle of Kerr rotation) can be enlarged. Therefore, a high reproduction efficiency can be obtained since the C/N ratio is improved in accordance with the enhancement of the Kerr effect. As typical material from which the protective layers are made, there are $SiO_2$, SiO AlN, $Si_3N_4$ which can increase the weathering and humidity resistance, maintaining and securing reliability of the recording medium.

In the foregoing conventional medium structure, however, the magnetic film is not always satisfactorily protected and usable in unfavorable temperature and humidity conditions over a long period of time. Moreover, the noise level is substantially unsatisfactory as a recording medium.

More particularly, the protective materials of the magnetic film heretofore in use are unsatisfactory in the effect of protecting the magnetic film because of the following reasons: compositional deviation due to the so-called selective oxidization wherein only rare earth elements, for instance, are selectively oxidized; oxidization or corrosion of the film interface or pinholes therein. The properties of the recording medium are thereby deteriorated and, therefore, a serious problem in that the initial properties are reduced and become unmaintable has been caused.

The object of the present invention is to provide a magneto-optical recording medium having excellent weathering and humidity resistance, longer life and a reduced noise level. This object is solved by the magneto-optical recording medium according to independent claim 1. Further advantageous features are evident from dependent claims 2 to 7.

The magneto-optical recording medium structure according to the present invention comprises a transparent substrate, a primary protective layer formed on the transparent substrate, a magneto-optical recording layer made from material having the magneto-optical effect formed on the primary protective layer and a protective layer formed on the recording layer.According to the invention the primary protective layer and the protective layer are formed from $Y_2O_3$ (yttrium oxide) and/or a higher or lower $Y_2O_3$ oxide, having a refractive index of over 1.8. $Y_2O_3$, and/or a higher or lower $Y_2O_3$ oxide having a refractive index of over 1.8 forming the primary protective layer and the protective layer eliminates pinholes and performs excellent weathering and humidity resistance.

Further, the use of $Y_2O_3$ and/or a higher or lower $Y_2O_3$ oxide having a refractive index of over 1.8 yields reduction in the noise level of the recording medium.

As described above, the magneto-optical recording medium structure according to the invention is sandwiched between two protective layers consisting of $Y_2O_3$ and/or a higher or lower $Y_2O_3$ oxide, which is so selected that refractive indexes of the two protective layers are set at over 1.8. Preferred are refractive indices within the range of 1.86 to 1.95. The magneto-optical recording medium having such a structure hardly allows the production of pinholes for a long period of time since neither air nor water premeability exists.

Furthermore, it is preferred that in the magneto-optical recording medium according to the invention constructed as described above, the crystal structure of $Y_2O_3$ and/or a higher or lower $Y_2O_3$ oxide forming the two protective layers is of a rare earth oxide C type. A ratio of the crystal face (440) of the crystal structure is preferably made higher than that of the crystal face (332) thereof. It is especially preferred that the ratio of the crystal face (440) is over 1/30 time higher than that of the crystal face (222).

In the magneto-optical recording medium thus constructed, the film structure is so fine that pinholes are hardly produced. Moreover, such a film structure provides a trapping action to prevent oxygen from being taken into the film, whereby it exhibits excellent weathering and humidity resistant properties.

$Y_2O_3$ and/or a higher or lower $Y_2O_3$ oxide having the aforesaid structure offers and maintains a high C/N ratio, thus contributing to reduction in the noise level to a large extent.

According to a preferred embodiment of the present invention, the thickness of the first protective means is adjusted to $\lambda$ /4 or approximately odd times the wave length $\lambda$ /4 of the used laser beam.

According to an advantageous embodiment of the present invention, the transparent substrate consists of polycarbonate (PC).

In the following, the invention will be described in the context of the enclosed figures of the accompanying drawings.

Fig. 1 is a partial sectional view showing a magneto-optical recording medium embodying the present invention.

Fig. 2 is a graph showing the relation of the argon gas pressure used at the time of sputtering for film formation to the refractive index of the protective film formed.

Figs. 3 and 4 are graphs showing the results obtained from the testing of the magneto-optical recording medium according to the present invention for weathering resistance in comparison with the data of a conventional recording medium.

Referring now to the accompanying drawings, the present invention will subsequently be described.

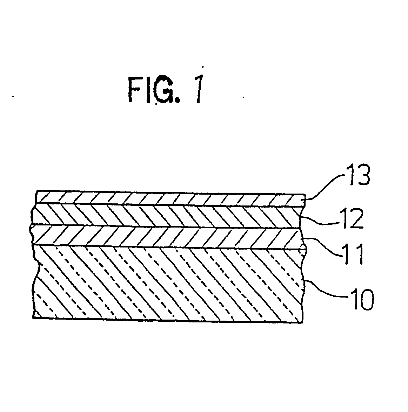

Fig. 1 shows a magneto-optical recording medium embodying the present invention, comprising a low grade PC (polycarbonate) substrate 10, a primary protective layer 11, a recording layer 12 and a protective layer 13 which are laminated in order and formed into a film through sputtering. The recording medium is, as is well known, formed into a disk with tracking grooves (not shown) provided in the recording face in the circumferential direction.

Further materials that can be used as the transparent substrate 10 are, e.g., PMMA (polymethyl methacrylate) and epoxy resin.

The primary protective layer 11 and the protective layer 13 are formed of $Y_2O_3$ or $Y_2O_3$ oxide as its higher or lower oxide having a refractive index of over 1.8. $Y_2O_3$ and/or a higher or lower $Y_2O_3$ oxide hardly allows the production of pinholes and its high weathering resistance provides excellent protecting properties for the recording layer 12. The recording layer 12 is sandwiched between the two protective layers 11, 13, which prevent oxidization and protect the former from variation with time.

The thickness d of the primary protective layer 11 is adjusted to $\lambda$ /4 or approximately odd times the wavelength $\lambda$/4 of a laser beam for use, given the refractive index of $Y_2O_3$ and/or a higher or lower $Y_2O_3$ oxide forming the primary protective layer 11 is n. Assuming the refractive index of $Y_2O_3$ would be n = 1.8 to 2.2 and the laser wavelength $\lambda$ = 780 to 800 nr then the primary protective layer 11 would be formed into a film with d = 80 to 100 nm (d = 800 to 1,000 Å).

On the primary protective layer 11 is the recording layer 12 about 100 nm (1,000 Å) thick prepared from amorphous magnetic material having the magneto-optical effect such as a TbFeCo alloy film which is a rare earth-transition metal amorphous alloy film. On the recording layer 12 the protective layer 13 is prepared from $Y_2O_3$ and/or a higher or lower $Y_2O_3$ oxide having a refractive index of over 1.8. The primary protective layer 11 and the protective layer 13 are formed into films on the transparent substrate 10 and on the recording layer 12 respectively, through sputtering with $Y_2O_3$ and/or a higher or lower $Y_2O_3$ oxide having a refractive index of over 1.8 as a target in the atmosphere of Ar (argon) gas. The recording layer 12 is also formed into a film.

The recording medium thus constructed was set in a magneto-optical evaluating apparatus and a magneto-optical head having a laser diode with a laser wavelength $\lambda$ = 800 nm

An object lens with NA = 0.55 was used to record and reproduce information while the disk was turned at 1,800 r.p.m. With the following conditions: linear velocity = 10 m/s; laser beam recording power = 8.5 mW; and reproductive power 3 mW, a C/N ratio higher than 55 dB (recording frequency f: 1 MHz, Bandwidth BW: 30 KHz) and a high reproductive amplitude were obtained. The noise level of the recording medium with the primary protective layer 11 and the protective layer 13 formed from $Y_2O_3$ and/or a higher or lower $Y_2O_3$ oxide having a refractive index of over 1.8 was reduced by about 2 to 5 dB as compared with those prepared from $SiO_2$, Sio, AlN, etc. Moreover, the protective layers 11, 13 exhibited high weathering and humidity resistance, whereby excellent properties for protecting the recording layer were obtained.

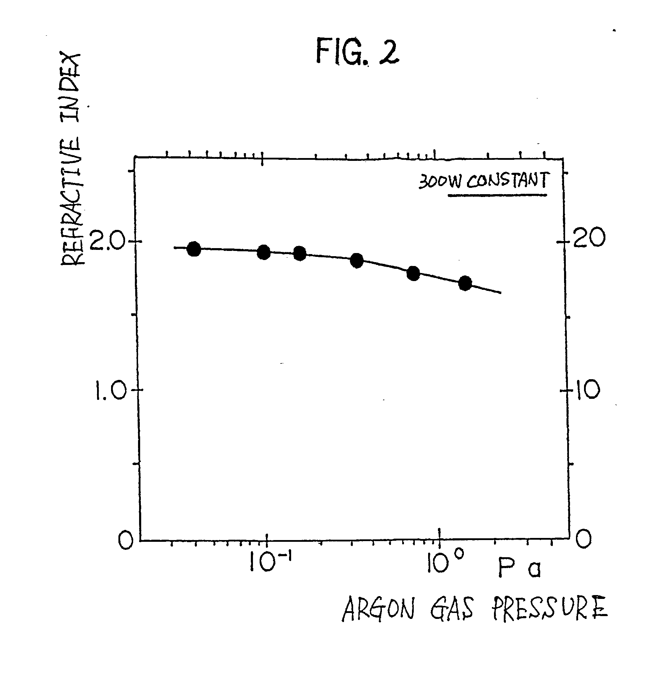

Fig. 2 is a graph showing the relation of the argon gas pressure used when the protective films 11, 13 were formed through the sputtering to the refractive indexes of the formed protective films 11, 13. As is obvious from the graph, the protective films are formed with a refractive index at which good practical results are obtained when the argon gas pressure used is maintained within the range of about $1 \times 10^{-2}$ to 1 Pa. The refractive index n is then over 1.8. Above all, it was confirmed that when n is within the range of 1.86 to 1.95 as shown in the graph, the best results were obtained with the protective films 11, 13 . The noise level of the recording medium including the primary protective layer 11 and the protective layer 13 formed from $Y_2O_3$ and/or a higher or lower $Y_2O_3$ oxide was reduced by about 2 to 5 dB with the selected refractive indexes of the protective layers 11, 13 if it was set within the range of 1.86 to 1.95 as compared with those made from $SiO_2$, SiO, AlN, etc. Further, the protective layers 11, 13 exhibited high weathering and humidity resistance, whereby excellent properties for protecting the recording layer were obtained.

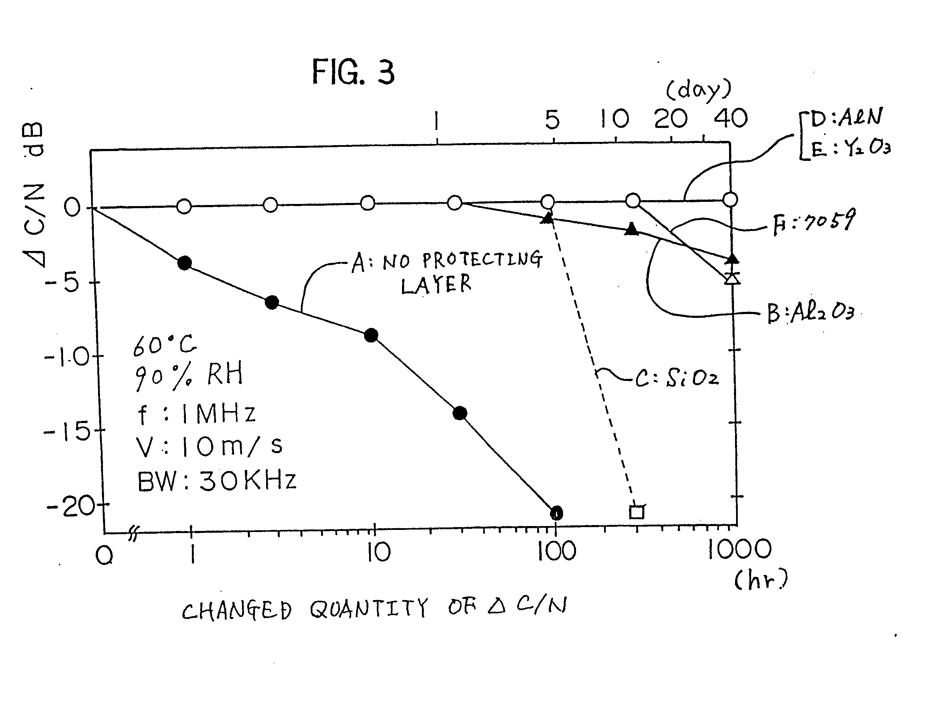

Fig. 3 is a graph showing the results obtained from testing the magneto-optical recording media for weathering resistance. In Fig. 3, the abscissa axis represents hours (hr) during which the recording media were left in the aforesaid atmosphere, whereas the ordinate axis represents the changed

quantity (dB) of $\Delta C/N$. Reference character A shows a recording medium without the protective layer; B with a protective layer of $Al_2O_3$; C with a protective layer of $SiO_2$; D with a protective layer of AlN; E with a protective layer of $Y_2O_3$ having a refractive index of over 1.8 embodying the present invention; and F With a protective layer of barium borosilicate glass 7059 (product number of Corning Co., Ltd.).

The aforesaid recording media were left in an atmosphere at a temperature of 60 ° C and relative humidity of 90 %. In the recording medium without the protective layer $\Delta C/N$ sharply decreased as shown by A from the beginning and it was found unusable aftera short time. In the recording medium with the protective layer of $Al_2O_3$, $\Delta C/N$ = 0 was proved unmaintainable after it was left for 30 hours as shown by B. In the recording medium with the protective layer of $SiO_2$, good initial properties could be maintained for 100 hours but then $\Delta C/N$ sharply grew as shown by C and the recording medium became unusable as a disk medium. Further, in the recording medium with the protective layer of the barium borosilicate glass 7059, good initial properties could be maintained for 300 hours, but $\Delta C/N$ suddenly decreased beyond that length of time and also became unusable as a recording medium as shown by F.

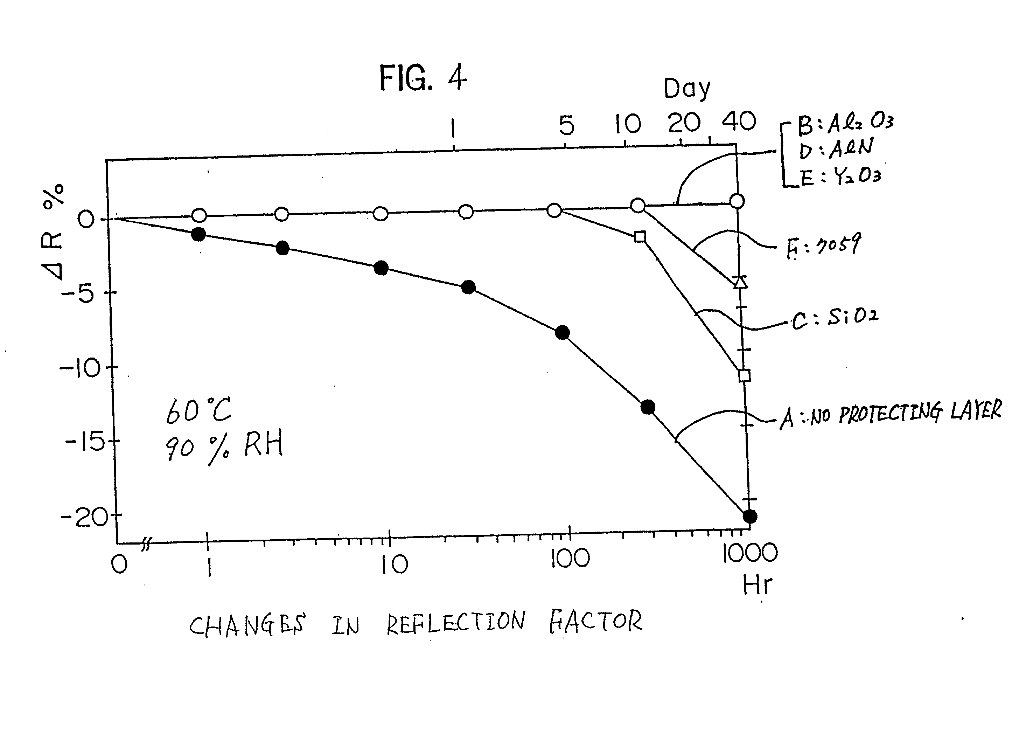

The same tendency as what is shown in Fig. 3 is observed from the weathering resistance test of Fig. 4 as viewed from changes in the reflection factor $\Delta R(\%)$ of the reflection factor R. As is obvious from Fig. 4, even 7059 which has been considered a protective layer having the best properties became unusable after it was left for about 300 hours.

On the other hand, in the case of the protective layer of $Y_2O_3$ and/or a higher or lower $Y_2O_3$ oxide having a refractive index of over 1.8 according to the present invention, $\Delta$ C/N = 0 and $\Delta R$ = 0 were maintained even after the magneto-optical medium was held for 1,000 hours in the atmosphere described above as shown in Figs. 3 and 4 and, in view of the noise level and reflection factor, no deterioration of properties was observed. It was also confirmed that the initial properties were free from fluctuation for a long period of time in unfavorable conditions including high temperatures and high humidity. Therefore, the weathering resistance is increased by a large margin, so that a medium structure excellent in weathering and humidity resistance can be obtained. This is due to the fact that $Y_2O_3$ and/or a higher or lower $Y_2O_3$ oxide was employed as the protective layer, with a refractive index n set over 1.8 to provide the stabilized protective film structure. Especially when the selected refractive index of the protective layer n is set within the range of 1.86 to 1.95, the structure of the medium becomes such that the practically best results are obtainable.

Although the sputtering technique has been selected so as to form the protective layers 11, 13 into films, it is also possible to employ the vacuum deposition technique for this purpose. In both cases, the optical refractive index of the $Y_2O_3$ protective film changes with the film forming condition. Consequently, by the optimum control of the change it is possible to obtain excellent film structure.

According to a different arrangement of the present invention, the crystal structure of the primary protective layer 11 and the protective layer 13 is of a rare earth oxide C type and a ratio of its crystal face, (440) is made higher than that of the crystal face (332) and, further, over 1/30 time higher than the crystal face (222). The $Y_2O_3$ and/or a higher or lower $Y_2O_3$ oxide thus formed into a film provides fine film structure and hardly allows the production of pinholes, but offers high weathering resistance and properties for protecting the recording layer 12.

In this arrangement of the invention, on the primary protective layer 11 is formed the recording layer 12 about 100 nm (1,000 Å) thick made from amorphous magnetic material having the magneto-optical effect such as a TbFeCo alloy film which is a rare earth-transition metal amorphous alloy film. The primary protective layer 11 and the protective layer 13 are formed on the transparent substrate 10 and the recording layer 12, respectively, by means of the sputtering techniques.

The sputtering employed at that time is the one which is called RF magnetron sputtering.

The sputter power for use at the time of sputtering is set at 100 to 600 W with an argon gas pressure of $2 \times 10^{-2}$ to 1 Pa (pascal). Satisfactory results are obtainable provided that the film forming conditions are within the exemplified range, but optimum conditions should be preferred. The protective film formed in the film forming conditions is least subjected to refractive index changes with the passage of time and years. Further, the film structure is fine and it features that not only the film forming rate at the time of film formation but also film forming speed is high.

The crystal structure of $Y_2O_3$ and/or at least one higher or lower $Y_2O_3$ oxide, e.g., as higher oxide $Y_2O_{3.2}$ as lower oxide $Y_2O_{2.8}$, respectively, can be used and formed into a film by adjusting and controlling the argon gas pressure and sputter power at the time of sputtering changes.

Accordingly, as the optimum film forming conditions, the sputter power was set at 300 W and the argon gas pressure within the range of $1 \times 10^{-2}$ to $7 \times 10^{-1}$ Pa and sputtering was carried out actually.

As a result, a protective film of $Y_2O_3$ and/or a higher or lower $Y_2O_3$ oxide having a refractive index of over 1.8 and having the oxide crystal structure of the rare earth C type was obtained. The oxide crystal structure of the rare earth C type was such that 1/4 of the total oxygen has been extracted from fluorite and empty hole points of oxygen stood in line in the crystallographic axis direction of <111> . The $Y_2O_3$ and/or a higher or lower $Y_2O_3$ oxide film thus formed has orientation properties and is particularly orientated to the crystal faces (222), (332) and (440).

X-rays were irradiated on the $Y_2O_3$ and/or a higher or lower $Y_2O_3$ oxide film having a refractive index of over 1.8 thus formed by setting the gas pressure in the aforesaid atmosphere of argon gas, i.e., the degree of vacuum within the optimum range according to the present invention to observe the diffraction pattern. As a result, the height of the ratio of the crystal face (440) was found higher than that of the crystal face (332). Further, the diffraction strength of the face (440) was over 1/30 time that of the face (222) and, more particularly when the selected strength was set at over 1/10, favorable protective film properties were exhibited. The argon gas pressure at the time was within the set range, namely approximately $3.0 \times 10^{-1}$ Pa.

The recording medium thus constructed was set in a magneto-optical evaluating apparatus and information was recorded and reproduced in a manner as describe hereinabove. The result was a C/N ratio higher than 55 dB (recording frequency f; 1 MHz, BW: 30 KHz) and a high reproductive amplitude In the recording medium with the protective layers 11 and 13 formed of $Y_2O_3$ and/or a higher or lower $Y_2O_3$ oxide, the protective layers 11, 13 had a rare earth oxide C type crystal and, because the crystal ratio of the face (440) was higher than that of the face (332), the properties had been changed to be improved. Accordingly, the noise level of the recording medium was reduced by about 2to 5 dB as compared with those made from $SiO_2$, SiO, AlN, etc. Further, the protective layers 11, 13 performed the trapping action to prevent oxygen from being taken into the film and exhibited high weathering and humidity resistance, thus making it possible to obtain excellent recording layer protecting properties. The excellent results were obtained by employing $Y_2O_3$ and/or a higher or lower $Y_2O_3$ oxide having a refractive index of over 1.8 for the protective layer, forming the crystal structure of the rare earth oxide C type and making the ratio of the crystal face (440) higher than that of the crystal face (332). Particularly when the ratio of the crystal face (440) has the height over 1/30 time, above all, over 1/10 time that of the crystal face (222), the protective layer exhibited protection properties which had not been realized before.

As set forth above, the structure of the recording medium thus obtained exhibits excellent weathering and humidity resistant properties but hardly allows the production of pinholes for a long period of time, so that the life of the magneto-optical recording medium may be prolonged. Simultaneously, noise level reduction can be accomplished and a medium having a high C/N ratio is obtainable. Further, the fine protective film structure and the stable medium structure are obtainable according to the present invention and the protective layers sandwiching the recording layer are free from air and water permeability.

## Claims

1. A magneto-optical recording medium for recording information comprising:

   a transparent substrate (10);

   first protecting means (11) for protecting said transparent substrate (10);

   means (12) for recording information;

   second protecting means (13) for protecting said recording means (12),

   wherein said recording means (12) is provided between said first (11) and second protecting means (13), and

   said first (11) and second protecting means (13) are made from one of $Y_2O_3$ and/or a higher or lower $Y_2O_3$ oxide,

   wherein the refractive indexes of said first (11) and second protecting means (13) are set at over 1.8.

2. A magneto-optical recording medium according to Claim 1, wherein said refractive indexes are set within the range of 1.86 to 1.95.

3. A magneto-optical recording medium according to Claim 1, or 2, wherein the crystal structure of $Y_2O_3$ and/or a higher or lower $Y_2O_3$ oxide is of a rare earth oxide C type.

4. A magneto-optical recording medium according to Claim 3, wherein a ratio of the crystal face (440) in the crystal structure is higher than that of the crystal face (332).

5. A magneto-optical recording medium according to Claim 4, wherein the ratio of the crystal face (440) is over 1/30 time higher than that of the crystal face (222).

6. A magneto-optical recording medium according to Claim 1, wherein the thickness of said first protecting means (11) is adjusted to λ /4 or approximately odd times the wavelength λ

/4 of a laser beam for use.

7. A magneto-optical recording medium of one of the preceding claims, wherein the substrate (10) is made from PC (polycarbonate).

## Revendications

1. Milieu d'enregistrement magnéto-optique pour enregistrer des informations, comprenant :

   un substrat transparent (10) ;

   des premiers moyens protecteurs (11) pour protéger ledit substrat transparent (10) ;

   des moyens (12) d'enregistrement d'informations ;

   des seconds moyens protecteurs (13) pour protéger lesdits moyens d'enregistrement (12), dans lequel lesdits moyens d'enregistrement (12) sont prévus entre lesdits premiers (11) et seconds (13) moyens protecteurs,

   lesdits premiers (11) et seconds (13) moyens protecteurs étant faits d'un oxyde choisi entre $Y_2O_3$ et/ou un oxyde supérieur ou inférieur à $Y_2O_3$,

   les indices de réfraction desdits premiers (11) et seconds (13) moyens protecteurs étant réglés à plus de 1,8.

2. Milieu d'enregistrement magnéto-optique selon la revendication 1, dans lequel lesdits indices de réfraction sont réglés dans la gamme allant de 1,86 à 1,95.

3. Milieu d'enregistrement magnéto-optique selon la revendication 1 ou 2, dans lequel la structure cristalline de l'oxyde $Y_2O_3$ et/ou d'un oxyde supérieur ou inférieur à $Y_2O_3$ et d'un type C d'oxyde de terre rare.

4. Milieu d'enregistrement magnéto-optique selon la revendication 3, dans lequel un rapport de la face cristalline (440) dans la structure cristalline est supérieur à celui de la face cristalline (332).

5. Milieu d'enregistrement magnéto-optique selon la revendication 4, dans lequel le rapport de la face cristalline (440) surpasse de 1/30 fois celui de la face cristalline (222).

6. Milieu d'enregistrement magnéto-optique selon la revendication 1, dans lequel l'épaisseur desdits premiers moyens protecteurs (11) est réglée à λ /4 ou approximativement un nombre impair de fois la longueur d'onde λ /4 d'un faisceau laser pour l'utilisation.

7. Milieu d'enregistrement magnéto-optique selon l'une quelconque des revendications précédentes, dans lequel le substrat (10) est fait de PC (polycarbonate).

**Patentansprüche**

1. Magneto-optisches Aufzeichnungsmedium zur Aufzeichnung von Informationen, mit

   einer transparenten Schicht (10);

   ersten Schutzmitteln (11) zum Schutz der transparenten Schicht (10);

   Mitteln (12) zur Informationsaufzeichnung;

   zweiten Schutzmitteln (13) zum Schutz der besagten Aufzeichnungsmittel (12);

   wobei die besagten Aufzeichnungsmittel (12) zwischen den ersten und den zweiten Schutzmitteln (13) angeordnet sind, und

   die ersten (11) und zweiten Schutzmittel (13) entweder aus $Y_2O_3$ und/oder einem höheren oder niedrigeren $Y_2O_3$-Oxyd bestehen,

   wobei die Brechungsindizes der besagten ersten (11) und zweiten Schutzmittel (13) höher als 1,8 angesetzt sind.

2. Magneto-optisches Aufzeichnungsmedium nach Anspruch 1, dadurch gekennzeichnet, daß die besagten Brechungsindizes in dem Bereich von 1,86 bis 1,95 angesetzt sind.

3. Magneto-optisches Aufzeichnungsmedium nach Anspruch 1 oder 2, dadurch gekennzeichnet, daß die Kristallstruktur des $Y_2O_3$ und/oder des höheren oder niedrigeren $Y_2O_3$-Oxydes vom C-Typ der Oxyde der seltenen Erden ist.

4. Magneto-optischer Aufzeichnungsträger nach Anspruch 3, dadurch gekennzeichnet, daß der Anteil der Kristallfläche (440) in der Kristallstruktur höher als der der Kristallfläche (332) ist.

5. Magneto-optischer Aufzeichnungsträger nach Anspruch 4, dadurch gekennzeichnet, daß der Anteil der Kristallfläche (440) 1/30 mal höher als der der Kristallfläche (222) ist.

6. Magneto-optisches Aufzeichnungsmedium nach Anspruch 1, dadurch gekennzeichnet, daß die Dicke der ersten Schutzmittel (11) auf λ/4 oder annähernd ein ungerades Vielfaches der Wellenlänge λ/4 eines zur Aufzeichnung benutzten Laserstrahles eingestellt ist.

7. Magneto-optische Aufzeichnungsschicht nach einem der vorhergehenden Ansprüche, dadurch gekennzeichnet, daß die Schicht (10) aus PC (Polykarbonat) besteht.

FIG. 1

FIG. 2

ARGON GAS PRESSURE

FIG. 3

EP 0 239 974 B1

FIG. 4

CHANGES IN REFLECTION FACTOR